(19) Europäisches Patentamt
European Patent Office
Office européen des brevets

(11) **EP 4 661 190 A1**

(12) **EUROPEAN PATENT APPLICATION**
published in accordance with Art. 153(4) EPC

(43) Date of publication:
**10.12.2025 Bulletin 2025/50**

(21) Application number: **24749893.4**

(22) Date of filing: **11.01.2024**

(51) International Patent Classification (IPC):
***H01M 50/443*** *(2021.01)* ***H01G 11/52*** *(2013.01)*
***H01M 4/02*** *(2006.01)* ***H01M 4/04*** *(2006.01)*
***H01M 4/13*** *(2010.01)* ***H01M 4/139*** *(2010.01)*
***H01M 50/403*** *(2021.01)* ***H01M 50/414*** *(2021.01)*
***H01M 50/451*** *(2021.01)*

(52) Cooperative Patent Classification (CPC):
**H01G 11/52; H01M 4/02; H01M 4/04; H01M 4/13; H01M 4/139; H01M 50/403; H01M 50/414; H01M 50/443; H01M 50/451;** Y02E 60/10

(86) International application number:
**PCT/JP2024/000500**

(87) International publication number:
**WO 2024/161938 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.01.2023 JP 2023012252**

(71) Applicant: **Zeon Corporation**
**Tokyo 100-8246 (JP)**

(72) Inventor: **TAKISHIMA, Keisuke**
**Tokyo 100-8246 (JP)**

(74) Representative: **Maiwald GmbH**
**Elisenhof**
**Elisenstraße 3**
**80335 München (DE)**

(54) **COMPOSITION FOR ELECTROCHEMICAL ELEMENT FUNCTIONAL LAYERS, METHOD FOR PRODUCING SAID COMPOSITION, FUNCTIONAL LAYER FOR ELECTROCHEMICAL ELEMENTS, MULTILAYER BODY FOR ELECTROCHEMICAL ELEMENTS, AND ELECTROCHEMICAL ELEMENT**

(57) A composition for an electrochemical device functional layer contains a particulate polymer having a particle diameter distribution that satisfies specific aspects and having a hydroxyl group surface localization rate of 25% or more.

EP 4 661 190 A1

**Description**

TECHNICAL FIELD

The present disclosure relates to a composition for an electrochemical device functional layer and method of producing the same, a functional layer for an electrochemical device, a laminate for an electrochemical device, and an electrochemical device.

BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

A lithium ion secondary battery, for example, generally includes battery members such as a positive electrode, a negative electrode, and a separator that isolates the positive electrode and the negative electrode from each other and prevents short-circuiting between the positive and negative electrodes.

In recent years, further improvements to electrochemical device members such as positive electrodes, negative electrodes, and separators have been studied with the aim of achieving even higher lithium secondary battery performance. In the course of such improvements, the stacking of a layer (functional layer) for displaying an expected function such as heat resistance or adhesiveness on a substrate has been attempted.

As one specific example, Patent Literature (PTL) 1 proposes a functional layer formed using a composition for an electrochemical device functional layer in which a particulate polymer that has an electrolyte solution contact angle and a volume-average particle diameter within specific ranges and that also has a core-shell structure is compounded. As another example, PTL 2 proposes an aqueous binder for a lithium ion battery separator containing a particulate polymer A and a particulate polymer B, wherein the particulate polymer A has a lower glass-transition temperature than the particulate polymer B, the particulate polymer A has a particle size D50 of 0.05 μm to 1.0 μm, and the particulate polymer B has a particle size D10 of 1.0 μm to 5.0 μm, D50 of 2.0 μm to 10 μm, and D90 of 3.0 μm to 20 μm.

CITATION LIST

Patent Literature

PTL 1: WO2022/124126A1
PTL 2: CN112920747A

SUMMARY

(Technical Problem)

However, a conventional electrochemical device member that includes a functional layer according to the conventional techniques described above leaves room for improvement in terms of maintaining a thin functional layer thickness while also increasing adhesiveness of the functional layer in a state in which it has been immersed in electrolyte solution (hereinafter, also referred to as "wet adhesiveness") and enhancing cycle characteristics of an electrochemical device.

Accordingly, one object of the present disclosure is to provide a composition for a functional layer that can display sufficiently high wet adhesiveness even with a thin thickness and that can sufficiently enhance cycle characteristics of an obtained electrochemical device, and also to provide a method of producing this composition for a functional layer.

Another object of the present disclosure is to provide a functional layer for an electrochemical device that can display sufficiently high wet adhesiveness even with a thin thickness and that can sufficiently enhance cycle characteristics of an obtained electrochemical device.

Yet another object of the present disclosure is to provide a laminate for an electrochemical device including a functional layer for an electrochemical device that can display sufficiently high wet adhesiveness even with a thin thickness and that can sufficiently enhance cycle characteristics of an obtained electrochemical device, and also to provide an electrochemical device that includes this laminate for an electrochemical device and that has excellent cycle characteristics.

(Solution to Problem)

The inventor conducted diligent studies with the aim of achieving the objects set forth above. The inventor made a new discovery that in the case of a functional layer that is formed using a composition for an electrochemical device functional layer containing a particulate polymer that has a particle diameter distribution satisfying specific aspects and has a hydroxyl group surface localization rate of 25% or more, this functional layer can display sufficiently high wet adhesiveness even with a thin thickness and can sufficiently enhance cycle characteristics of an obtained electrochemical device. In this manner, the inventor completed the present disclosure.

[1] Specifically, with the aim of advantageously solving the problem set forth above, a presently disclosed composition for an electrochemical device functional layer comprises a particulate polymer, wherein the particulate polymer has a hydroxyl group surface localization rate of 25% or more as calculated according to formula (1), shown below, and the particulate polymer has a volume-based particle diameter D99 of 15.0 μm or less and a volume-average particle diameter D50 of not less than 1.0 μm and not more than 10.0 μm.

Localization rate (%) = {(Amount of hydroxyl groups calculated through XPS (X-ray Photoelectron Spectroscopy) measurement [element ratio (%)])/(Amount of hydroxyl groups contained in particulate polymer [mol %])} $\times$ 100% (1)

In the case of a functional layer that is formed using a composition for an electrochemical device functional layer containing a particulate polymer that has a particle diameter distribution satisfying specific aspects and has a hydroxyl group surface localization rate of 25% or more in this manner, this functional layer can display sufficiently high wet adhesiveness even with a thin thickness and can sufficiently enhance cycle characteristics of an obtained electrochemical device.

Note that the particle diameter distribution and hydroxyl group surface localization rate of a particulate polymer can be measured by methods described in the EXAMPLES section of the present specification.

[2] In the composition for an electrochemical device functional layer according to the foregoing [1], the particulate polymer preferably includes a hydroxyl group-containing monomer unit or an epoxy group-containing monomer unit in a proportion of not less than 5 mass% and not more than 40 mass%. When the particulate polymer includes a hydroxyl group-containing monomer unit or an epoxy group-containing monomer unit in a proportion of not less than 5 mass% and not more than 40 mass%, a functional layer that has been formed using the composition for a functional layer can display even higher wet adhesiveness even with a thin thickness and can even further enhance cycle characteristics of an obtained electrochemical device.

When a polymer is said to "include a monomer unit" in the present disclosure, this means that "a polymer obtained using that monomer includes a structural unit derived from the monomer". Moreover, the proportional content of a monomer unit in a polymer can be measured by nuclear magnetic resonance (NMR) methods such as $^{1}$H-NMR and $^{13}$C-NMR.

[3] Moreover, with the aim of advantageously solving the problem set forth above, a presently disclosed method of producing a composition for an electrochemical device functional layer is a method of producing the composition for an electrochemical device functional layer according to the foregoing [1] or [2], comprising, in production of the particulate polymer, performing polymerization in which a monomer composition (B) is added into a polymerization system and polymerization is continued after polymerization of a monomer composition (A) has been initiated, wherein the monomer composition (A) and the monomer composition (B) have different chemical compositions to each other, the monomer composition (B) contains either or both of a hydroxyl group-containing monomer and an epoxy group-containing monomer, and a solid content mass ratio (%) of the monomer composition (A) and the monomer composition (B) calculated according to formula (2), shown below, is 40 mass% or less.

Solid content mass ratio (%) = {(Parts by mass of monomer composition (B))/(Total parts by mass of monomer compositions (A) and (B))} $\times$ 100(%) (2)

By performing polymerization in which a monomer composition (B) is added into a polymerization system and polymerization is continued after polymerization of a monomer composition (A) has been initiated, and by setting the proportion constituted by the monomer composition (B) as 40 mass% or less of the total of the monomer compositions (A) and (B), it is possible to effectively inhibit coarsening of the particulate polymer and also to inhibit thickening of an obtained functional layer.

[4] The method of producing a composition for an electrochemical device functional layer according to the foregoing [3] preferably comprises, in the polymerization, adding the monomer composition (B) into the polymerization system at a time at which a polymerization conversion rate of the monomer composition (A) is not less than 70% and not more than 95%. By adding the monomer composition (B) into the polymerization system at a time at which the polymerization conversion rate of the monomer composition (A) is not less than 70% and not more than 95%, it is possible to effectively inhibit coarsening of the particulate polymer and also to inhibit thickening of an obtained functional layer.

[5] Furthermore, with the aim of advantageously solving the problem set forth above, a presently disclosed functional layer for an electrochemical device is formed using the composition for an electrochemical device functional layer according to the foregoing [1] or [2]. This functional layer for an electrochemical device can display sufficiently high wet adhesiveness even with a thin thickness and can sufficiently enhance cycle characteristics of an obtained electrochemical device.

[6] Also, with the aim of advantageously solving the problem set forth above, a presently disclosed laminate for an electrochemical device comprises: a substrate; and the functional layer for an electrochemical device according to the foregoing [5], formed on the substrate. A laminate for an electrochemical device that includes the presently disclosed functional layer for an electrochemical device in this manner has excellent wet adhesiveness and can sufficiently enhance cycle characteristics of an obtained electrochemical device.

[7] Moreover, with the aim of advantageously solving the problem set forth above, a presently disclosed electrochemical device comprises the laminate for an electrochemical device according to the foregoing [6]. An electrochemical device that includes the presently disclosed laminate for an electrochemical device has excellent cycle characteristics.

(Advantageous Effect)

According to the present disclosure, it is possible to provide a composition for a functional layer that can display sufficiently high wet adhesiveness even with a thin thickness and that can sufficiently enhance cycle characteristics of an obtained electrochemical device, and also to provide a method of producing this composition for a functional layer.

Moreover, according to the present disclosure, it is possible to provide a functional layer for an electrochemical device that can display sufficiently high wet adhesiveness even with a thin thickness and that can sufficiently enhance cycle characteristics of an obtained electrochemical device.

Furthermore, according to the present disclosure, it is possible to provide a laminate for an electrochemical device including a functional layer for an electrochemical device that can display sufficiently high wet adhesiveness even with a thin thickness and that can sufficiently enhance cycle characteristics of an obtained electrochemical device, and also to provide an electrochemical device that includes this laminate for an electrochemical device and that has excellent cycle characteristics.

DETAILED DESCRIPTION

The following provides a detailed description of embodiments of the present disclosure. The presently disclosed composition for an electrochemical device functional layer (hereinafter, also referred to simply as a "composition for a functional layer") is used to form the presently disclosed functional layer for an electrochemical device (hereinafter, also referred to simply as a "functional layer"). The presently disclosed composition for a functional layer can be efficiently produced by the presently disclosed method of producing a composition for an electrochemical device functional layer. Moreover, the presently disclosed laminate for an electrochemical device includes the presently disclosed functional layer for an electrochemical device. Furthermore, the presently disclosed electrochemical device is an electrochemical device that includes at least the presently disclosed laminate for an electrochemical device. The presently disclosed "functional layer" can be an "electrode mixed material layer" that is included in an electrode such as a positive electrode or a negative electrode and that can display a function as an electrode, an "adhesive layer" that is disposed between members in an electrochemical device and that can display an adhesive function between those members, or a "heat-resistant adhesive layer" that can display heat resistance in addition to an adhesive function. In particular, the presently disclosed "functional layer" is preferably a "heat-resistant adhesive layer". The heat-resistant adhesive layer serving as the "functional layer" is provided at the surface of a separator in an electrochemical device, can provide heat resistant protection to the separator, and can also display an inter-member adhesive function between the separator and a positive electrode and/or negative electrode.

(Composition for electrochemical device functional layer)

The presently disclosed composition for an electrochemical device functional layer is a composition for an electrochemical device functional layer that contains a particulate polymer and that can optionally further contain a dispersion medium such as water and other components. Features of the particulate polymer are that the particulate polymer has a hydroxyl group surface localization rate of 25% or more as calculated according to formula (1), shown below, and also has a volume-based particle diameter D99 of 15.0 μm or less and a volume-average particle diameter D50 of not less than 1.0 μm and not more than 10.0 μm.

Localization rate (%) = {(Amount of hydroxyl groups calculated through XPS measurement [element ratio (%)])/(Amount of hydroxyl groups contained in particulate polymer [mol%])} × 100% (1)

Through the composition for a functional layer satisfying the features set forth above, it is possible to provide a composition for a functional layer that can display sufficiently high wet adhesiveness even with a thin thickness and that can sufficiently enhance cycle characteristics of an obtained electrochemical device. By causing localization at the surface of the particulate polymer of hydroxyl groups that can contribute to increasing adhesiveness, it is possible to increase adhesiveness of the particulate polymer. Moreover, thickness reduction of a heat-resistant adhesive layer can also be realized as a result of the particulate polymer satisfying a specific particle diameter distribution. The inclusion of a functional layer having a thin thickness and high adhesiveness as set forth above in an electrochemical device is thought to enable effective inhibition of collapse of the internal structure of the electrochemical device in accompaniment to repeated charging and discharging. As a consequence, it is thought to be possible for an electrochemical device that includes a functional layer formed using the presently disclosed composition for a functional layer to have excellent cycle characteristics.

<Particulate polymer>

The particulate polymer that is contained in the composition for a functional layer is a particulate polymer that has a particle diameter distribution satisfying specific aspects and that has a hydroxyl group surface localization rate of 25% or more as described in detail below. Note that the particulate polymer may have a particulate form or may have any other form after members have been adhered via a functional layer that has been formed using the composition for a functional layer.

<<Hydroxyl group surface localization rate of particulate polymer>>

The particulate polymer is required to have a hydroxyl group surface localization rate of 25% or more as calculated according to formula (1), shown below. The hydroxyl group surface localization rate is preferably 30% or more, and more preferably 35% or more. When the hydroxyl group surface localization rate of the particulate polymer is not less than any of the lower limits set forth above, wet adhesiveness of an obtained functional layer can be increased, and cycle characteristics of an obtained electrochemical device can be enhanced. The upper limit for the hydroxyl group surface localization rate of the particulate polymer is not specifically limited and can be 90% or less, for example. The value of the hydroxyl group surface localization rate can be controlled through adjustment of the chemical compositions of monomer compositions (A) and (B) that are used in production of the particulate polymer, the timing of addition of the monomer composition (B), and so forth.

Localization rate (%) = {(Amount of hydroxyl groups calculated through XPS measurement [element ratio (%)])/(Amount of hydroxyl groups contained in particulate polymer [mol%])} × 100% (1)

<<Particle diameter distribution of particulate polymer>>

The particulate polymer is required to have a particle diameter distribution in which the volume-based particle diameter D99 is 15.0 μm or less and the volume-average particle diameter D50 is not less than 1.0 μm and not more than 10.0 μm. In more detail, the volume-based particle diameter D99 of the particulate polymer is preferably 12.0 μm or less, and more preferably 10.0 μm or less. When the volume-based particle diameter D99 is not more than any of the upper limits set forth above, thickening of a functional layer due to coarse particulate polymer can be suitably inhibited. Note that from a viewpoint of increasing wet adhesiveness of an obtained functional layer and even further enhancing cycle characteristics of an obtained electrochemical device, the volume-based particle diameter D99 is preferably 2.0 μm or more.

The volume-average particle diameter D50 of the particulate polymer is preferably 1.5 μm or more, and more preferably 2.0 μm or more, and is preferably 8.0 μm or less, and more preferably 6.0 μm or less. When the volume-average particle diameter D50 of the particulate polymer is not less than any of the lower limits set forth above, wet adhesiveness of an obtained functional layer can be increased, and cycle characteristics of an obtained electrochemical device can be even further enhanced. Moreover, when the volume-average particle diameter D50 of the particulate polymer is not more than any of the upper limits set forth above, thickening of a functional layer due to coarse particulate polymer can be suitably inhibited.

The particle diameter distribution of the particulate polymer can be controlled through adjustment of polymerization conditions, and specifically through the amount of polymerization initiator.

<<Chemical composition of particulate polymer>>

No specific limitations are placed on the chemical composition of the particulate polymer so long as the particulate polymer satisfies the conditions relating to the hydroxyl group surface localization rate and the particle diameter distribution described above. In particular, it is preferable that the particulate polymer includes at least a hydroxyl group-containing monomer unit or an epoxy group-containing monomer unit. An epoxy group-containing monomer unit that is included among repeating units of the particulate polymer undergoes ring opening to form a hydroxyl group in the composition for a functional layer and can display wet adhesiveness in a functional layer. Note that besides a hydroxyl group-containing monomer unit or an epoxy group-containing monomer unit, the particulate polymer preferably includes an aromatic vinyl monomer unit, a (meth)acrylic acid ester monomer unit (however, a unit corresponding to a hydroxyl group-containing monomer unit is excluded), and a cross-linkable monomer unit, for example.

[Hydroxyl group-containing monomer unit]

Examples of hydroxyl group-containing monomers that can be used to form a hydroxyl group-containing monomer unit include N-methylolamide group-containing monomers and acrylic acid hydroxyalkyl ester monomers. Specifically, examples of N-methylolamide group-containing monomers include N-methylol (meth)acrylamide and N-butoxymethylol (meth)acrylamide. Moreover, examples of (meth)acrylic acid hydroxyalkyl ester monomers include 2-hydroxyethyl (meth)acrylate and 2-hydroxypropyl (meth)acrylate. Note that in the present specification, "(meth)acryl" is used to indicate "acryl" or "methacryl". One of these monomers can be used individually, or a plurality of these monomers can be used in combination.

[Epoxy group-containing monomer unit]

Examples of epoxy group-containing monomers that can be used to form an epoxy group-containing monomer unit include unsaturated glycidyl ethers such as vinyl glycidyl ether, allyl glycidyl ether, butenyl glycidyl ether, o-allylphenyl glycidyl ether, and glycidyl(2-butenyl) ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid. Of these epoxy group-containing monomers, unsaturated glycidyl ethers and glycidyl esters of unsaturated carboxylic acids are preferable, allyl glycidyl ether, glycidyl(2-butenyl) ether, and glycidyl methacrylate are more preferable, and glycidyl methacrylate is even more preferable. Note that one of these epoxy group-containing unsaturated monomers may be used individually, or two or more of these epoxy group-containing unsaturated monomers may be used in combination in a freely selected ratio.

The proportional content of hydroxyl group-containing monomer units or epoxy group-containing monomer units in the particulate polymer when all repeating units included in the particulate polymer are taken to be 100 mass% is preferably 5 mass% or more, more preferably 7 mass% or more, and even more preferably 10 mass% or more, and is preferably 40 mass% or less, more preferably 35 mass% or less, and even more preferably 30 mass% or less. When the proportional content of hydroxyl group-containing monomer units or epoxy group-containing monomer units in the particulate polymer is not less than any of the lower limits set forth above, wet adhesiveness of an obtained functional layer can be even further increased, and, as a result, cycle characteristics of an obtained secondary battery can be even further enhanced. Moreover, when the proportional content of hydroxyl group-containing monomer units or epoxy group-containing monomer units in the particulate polymer is not more than any of the upper limits set forth above, coarsening of the particulate polymer can be inhibited and thickening of a functional layer can also be inhibited, presumably because the ratio of water-soluble components among constituent components of the particulate polymer can be restricted from becoming excessively high.

[Aromatic vinyl monomer unit]

Examples of aromatic vinyl monomers that can form an aromatic vinyl monomer unit include, but are not specifically limited to, styrene, α-methylstyrene, styrene sulfonic acid, butoxystyrene, and vinylnaphthalene, of which, styrene is preferable.

Note that one of these aromatic vinyl monomers may be used individually, or two or more of these aromatic vinyl monomers may be used in combination in a freely selected ratio.

The proportional content of aromatic vinyl monomer units in the particulate polymer when all repeating units included in the particulate polymer are taken to be 100 mass% is preferably not less than 40 mass% and not more than 90 mass%. When the proportional content of aromatic vinyl monomer units is within the range set forth above, a good balance of wet adhesiveness and degree of swelling in electrolyte solution of an obtained functional layer can be achieved.

[(Meth)acrylic acid ester monomer unit]

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Of these (meth)acrylic acid ester monomers, n-butyl acrylate, 2-ethylhexyl acrylate, and methyl methacrylate are preferable.

Note that one of these (meth)acrylic acid ester monomers may be used individually, or two or more of these (meth) acrylic acid ester monomers may be used in combination in a freely selected ratio.

The proportional content of (meth)acrylic acid ester monomer units in the particulate polymer when all repeating units included in the particulate polymer are taken to be 100 mass% is preferably not less than 5 mass% and not more than 20 mass%. When the proportional content of (meth)acrylic acid ester monomer units in the particulate polymer is within the range set forth above, a good balance of degree of swelling in electrolyte solution and wet adhesiveness of an obtained functional layer can be achieved.

[Cross-linkable monomer unit]

Examples of monomers that can form a cross-linkable monomer unit include polyfunctional monomers including two or more groups displaying polymerization reactivity. Examples of such polyfunctional monomers include divinyl compounds such as allyl methacrylate and divinylbenzene; di(meth)acrylic acid ester compounds such as diethylene glycol dimethacrylate, ethylene glycol dimethacrylate, diethylene glycol diacrylate, and 1,3-butylene glycol diacrylate; and tri(meth)acrylic acid ester compounds such as trimethylolpropane trimethacrylate and trimethylolpropane triacrylate. One of these monomers may be used individually, or two or more of these monomers may be used in combination. Of these monomers, ethylene glycol dimethacrylate is preferable.

The proportional content of cross-linkable monomer units in the particulate polymer when all repeating units included in the particulate polymer are taken to be 100 mass% is preferably not less than 0.05 mass% and not more than 2 mass%. When the proportional content of cross-linkable monomer units in the particulate polymer is within the range set forth above, a good balance of degree of swelling in electrolyte solution and wet adhesiveness of an obtained functional layer can be achieved.

<<Glass-transition temperature of particulate polymer>>

The glass-transition temperature of the particulate polymer is preferably 40°C or higher, more preferably 45°C or higher, and even more preferably 50°C or higher, and is preferably 110°C or lower, more preferably 100°C or lower, and even more preferably 90°C or lower. When the glass-transition temperature of the particulate polymer is not lower than any of the lower limits set forth above, tendency for a functional layer to more easily undergo blocking in a production process of an electrochemical device can be suppressed, and electrochemical device production efficiency can be increased. Moreover, when the glass-transition temperature of the particulate polymer is not higher than any of the upper limits set forth above, wet adhesiveness of an obtained functional layer can be even further increased, and cycle characteristics of an obtained electrochemical device can be even further enhanced. Note that the glass-transition temperature can be controlled through adjustment of the types and proportions of units that are included as repeating units of the particulate polymer.

<<Degree of swelling in electrolyte solution of particulate polymer>>

The degree of swelling in electrolyte solution of the particulate polymer is preferably 150% or more, more preferably 160% or more, and even more preferably 180% or more, and is preferably 1,200% or less, more preferably 1,000% or less, even more preferably 800% or less, and particularly preferably 500% or less. When the degree of swelling in electrolyte solution of the particulate polymer is not less than any of the lower limits set forth above, the particulate polymer swells to a suitable degree in electrolyte solution, and adhesiveness displayed by a functional layer after immersion in electrolyte solution can be increased. Moreover, when the degree of swelling in electrolyte solution of the particulate polymer is not more than any of the upper limits set forth above, an increase of internal resistance of an electrochemical device can be suppressed because the particulate polymer does not excessively swell in electrolyte solution, and, as a result, output characteristics of the electrochemical device can be enhanced.

Note that the degree of swelling in electrolyte solution of the particulate polymer can be measured according to a method described in the EXAMPLES section of the present specification. Moreover, the degree of swelling in electrolyte solution of the particulate polymer can be controlled through adjustment of the chemical composition of a polymer forming the particulate polymer, for example.

<<Production process of particulate polymer>>

The particulate polymer can be produced through polymerization of a monomer composition that contains the monomers described above, carried out in an aqueous solvent such as water, for example. The proportion constituted by each monomer in the monomer composition is normally set as the same as the proportion constituted by each monomer unit in the particulate polymer.

The method of polymerization is not specifically limited and may be a suspension polymerization method, an emulsion polymerization and aggregation method, a pulverization method, or the like, for example. In particular, a suspension polymerization method and an emulsion polymerization and aggregation method are preferable, and a suspension polymerization method is more preferable. Moreover, the polymerization reaction can be a reaction such as radical polymerization or living radical polymerization.

Other compounding agents such as chain transfer agents, polymerization regulators, polymerization reaction retardants, reactive fluidizers, fillers, flame retardants, antioxidants, and colorants can be compounded in any amount in the monomer composition that is used in production of the particulate polymer.

The following describes a method of producing the particulate polymer by suspension polymerization as one example. In particular, it is preferable that, in production of the particulate polymer, a polymerization step is performed in which a monomer composition (B) is added into a polymerization system and polymerization is continued after polymerization of a monomer composition (A) for which polymerization is to be initiated in advance has been initiated.

[Production of particulate polymer by suspension polymerization]

(1) Production of monomer composition

First, the monomer composition (A) for which polymerization is to be initiated in advance and the monomer composition (B) that is to be added into the polymerization system after polymerization of the monomer composition (A) has been initiated so as to continue polymerization are each prepared. In this preparation, various monomers are compounded according to the target chemical composition and hydroxyl group surface localization rate, and other compounding agents that are added as necessary are also mixed therewith.

The monomer composition (A) and the monomer composition (B) can be mixtures of various compounds that can provide monomer units that can form the particulate polymer, such as those that were previously listed in the "Chemical composition of particulate polymer" section. The monomer composition (A) and the monomer composition (B) have different chemical compositions to each other, and, more specifically, the monomer composition (B) contains either or both of a hydroxyl group-containing monomer and an epoxy group-containing monomer. In addition, it is preferable that the monomer composition (A) also contains either or both of a hydroxyl group-containing monomer and an epoxy group-containing monomer. More specifically, the monomer composition (A) and the monomer composition (B) preferably each contain, independently of each other, one or a plurality of types of monomers selected from an aromatic vinyl monomer, a (meth)acrylic acid ester monomer (however, a monomer corresponding to a hydroxyl group-containing monomer unit is excluded), a cross-linkable monomer, a hydroxyl group-containing monomer, and an epoxy group-containing monomer. In particular, it is preferable that the monomer composition (A) contains an aromatic vinyl monomer, a (meth)acrylic acid ester monomer, and a cross-linkable monomer and also contains either or both of a hydroxyl group-containing monomer and an epoxy group-containing monomer. Moreover, it is preferable that the monomer composition (B) contains an aromatic vinyl monomer and also contains either or both of a hydroxyl group-containing monomer and an epoxy group-containing monomer. Furthermore, it is preferable that the content of an aromatic vinyl monomer in the monomer composition (A) is higher than the content of an aromatic vinyl monomer in the monomer composition (B). The hydroxyl group-containing monomer content and the epoxy group-containing monomer content in the monomer composition (B) are preferably not less than 30 mass% and not more than 85 mass% when the total of the hydroxyl group-containing monomer content and the epoxy group-containing monomer content in the monomer compositions (A) and (B) is taken to be 100 mass%.

(2) Formation of droplets

Next, the monomer composition (A) is dispersed in water, a polymerization initiator is added, and then droplets of the monomer composition (A) are formed. No specific limitations are placed on the method by which the droplets are formed. For example, the droplets can be formed by using a disperser such as an emulsifying/dispersing device to perform shear stirring of the water containing the monomer composition (A).

The polymerization initiator that is used may be an oil-soluble polymerization initiator such as t-butyl peroxy-2-ethylhexanoate or azobisisobutyronitrile, for example. Note that the polymerization initiator may be added before droplet formation once the monomer composition (A) has been dispersed in water or may be added to the monomer composition (A) before dispersion thereof in water.

From a viewpoint of stabilizing droplets of the monomer composition (A) that are formed in the water, it is preferable that a dispersion stabilizer is added to the water and that droplets of the monomer composition (A) are then formed. The dispersion stabilizer may be sodium dodecylbenzenesulfonate, a metal hydroxide such as magnesium hydroxide, or the like, for example.

(3) Polymerization

Once droplets of the monomer composition (A) have been formed, the water containing the formed droplets is heated to initiate polymerization. Moreover, it is preferable that the monomer composition (B) is added so as to continue polymerization at a stage at which the polymerization conversion rate is within a specific range. The reaction temperature in the polymerization is preferably not lower than 50°C and not higher than 95°C. Moreover, the reaction time in the polymerization is preferably not less than 1 hour and not more than 10 hours, and is preferably 8 hours or less, and more preferably 6 hours or less.

The quantitative ratio in which the monomer compositions (A) and (B) are compounded is preferably set such that a solid content mass ratio (%) of the monomer compositions (A) and (B) calculated according to formula (2), shown below, is 40 mass% or less. When the solid content mass ratio (%) of the monomer compositions (A) and (B) is 40 mass% or less, absorption of the monomer composition into particles sufficiently proceeds in the polymerization step, and the formation of coarse particles can be effectively inhibited. As a result, thickening of a functional layer can be inhibited.

Solid content mass ratio (%) = {(Parts by mass of monomer composition (B))/(Total parts by mass of monomer compositions (A) and (B))} $\times$ 100% (2)

From a viewpoint of even further enhancing the effect of inhibiting formation of coarse particles described above, the solid content mass ratio (%) of the monomer compositions (A) and (B) calculated according to the preceding formula (2) is preferably 35 mass% or less, and more preferably 30 mass% or less. Moreover, the lower limit for the solid content mass ratio (%) of the monomer compositions (A) and (B) is preferably 5 mass% or more, and more preferably 10 mass% or more. When the solid content mass ratio (%) of the monomer compositions (A) and (B) is not less than any of the lower limits set forth above, efficient localization of hydroxyl groups at the surface of particles of the particulate polymer is possible, and wet adhesiveness of an obtained functional layer and cycle characteristics of an obtained electrochemical device can be even further enhanced.

The timing of addition of the monomer composition (B) into the polymerization system in the polymerization step is preferably a timing at which the polymerization conversion rate of the monomer composition (A) is 70% or more, more preferably a timing at which the polymerization conversion rate of the monomer composition (A) is 75% or more, and even more preferably a timing at which the polymerization conversion rate of the monomer composition (A) is 80% or more, and is preferably a timing at which the polymerization conversion rate of the monomer composition (A) is 95% or less, more preferably a timing at which the polymerization conversion rate of the monomer composition (A) is 94% or less, and even more preferably a timing at which the polymerization conversion rate of the monomer composition (A) is 93% or less. By adding the monomer composition (B) into the polymerization system at a timing at which the polymerization conversion rate is not less than any of the lower limits set forth above, excessive reduction of the hydroxyl group surface localization rate can be inhibited, and wet adhesiveness of an obtained functional layer and cycle characteristics of an electrochemical device can be even further enhanced. Moreover, by adding the monomer composition (B) into the polymerization system at a timing at which the polymerization conversion rate is not more than any of the upper limits set forth above, absorption of the monomer composition into particles sufficiently proceeds in the polymerization step, and formation of coarse particles can be effectively inhibited. As a result, thickening of a functional layer can be inhibited.

(4) Washing, filtration, dehydration, and drying step

Once the polymerization has ended, the particulate polymer can be obtained by subjecting the water containing the particulate polymer to washing, filtration, and drying by standard methods.

<Binder>

The presently disclosed composition for a functional layer may optionally contain a binder. The binder is a component that binds heat-resistant fine particles to one another in a functional layer. Known polymers that are used as binders may be used as the binder. For example, the binder may be a conjugated diene polymer, an acrylic polymer, polyvinylidene fluoride (PVDF), or polyvinyl alcohol (PVOH). One binder may be used individually, or two or more binders may be used in combination. The binder is preferably a polymer such as a conjugated diene polymer, an acrylic polymer, or polyvinylidene fluoride (PVDF) that is water-insoluble and that can be dispersed in a dispersion medium such as water, is more preferably a conjugated diene polymer or an acrylic polymer, and is even more preferably an acrylic polymer.
Note that when a polymer is said to be "water-insoluble" in the present disclosure, this means that when 0.5 g of the polymer is dissolved in 100 g of water at a temperature of 25°C, insoluble content is 90 mass% or more.
Here, the term "conjugated diene polymer" refers to a polymer that includes a conjugated diene monomer unit. Specific examples of the conjugated diene polymer include, but are not specifically limited to, a copolymer including an aromatic vinyl monomer unit and an aliphatic conjugated diene monomer unit such as a styrene-butadiene copolymer (SBR); butadiene rubber (BR); acrylic rubber (NBR) (copolymer including an acrylonitrile unit and a butadiene unit); and hydrogenated products thereof.
The term "acrylic polymer" refers to a polymer that includes a (meth)acrylic acid ester monomer unit.
One of these binders may be used individually, or two or more of these binders may be used in combination in a freely selected ratio.
The acrylic polymer that can preferably be used as the binder may be a polymer that includes a cross-linkable monomer unit and a (meth)acrylic acid ester monomer unit such as previously described and that also includes an acidic group-containing monomer unit described below, for example, but is not specifically limited thereto.
Examples of acidic group-containing monomers that can form an acidic group-containing monomer unit include monomers that include a carboxy group, monomers that include a sulfo group, monomers that include a phosphate group, and monomers that include a hydroxyl group. Note that compounds corresponding to the previously described "hydroxyl group-containing monomer unit" are excluded from monomers that include a hydroxyl group.
Examples of monomers that include a carboxy group include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.
Examples of monomers that include a sulfo group include vinyl sulfonic acid, methyl vinyl sulfonic acid, (meth) allyl sulfonic acid, (meth)acrylic acid 2-sulfoethyl, 2-acrylamido-2-methylpropane sulfonic acid, and 3-allyloxy-2-hydroxypropane sulfonic acid.
Note that in the present specification, "(meth)allyl" is used to indicate "allyl" and/or "methallyl".
Examples of monomers that include a phosphate group include 2-(meth)acryloyloxyethyl phosphate, methyl-2-(meth)acryloyloxyethyl phosphate, and ethyl-(meth)acryloyloxyethyl phosphate.
Note that in the present specification, "(meth)acryloyl" is used to indicate "acryloyl" and/or "methacryloyl".
Examples of monomers that include a hydroxyl group include the previously described (meth)acrylic acid hydroxyalkyl ester monomers.
Note that one of these acidic group-containing monomers may be used individually, or two or more of these acidic group-containing monomers may be used in combination in a freely selected ratio.
The proportion constituted by (meth)acrylic acid ester monomer units in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less. By setting the proportion constituted by (meth)acrylic acid ester monomer units as not less than the lower limit of any of the ranges set forth above, adhesiveness of a functional layer can be increased. Moreover, by setting the proportion constituted by (meth)acrylic acid ester monomer units as not more than any of the upper limits set forth above, electrochemical characteristics of an electrochemical device including a functional layer can be further enhanced.
The proportion constituted by cross-linkable monomer units in the acrylic polymer is preferably 0.1 mass% or more, and more preferably 1.0 mass% or more, and is preferably 3.0 mass% or less, and more preferably 2.5 mass% or less. By setting the proportion constituted by cross-linkable monomer units as not less than any of the limits set forth above, electrochemical characteristics of an electrochemical device including a functional layer can be even further enhanced. Moreover, by setting the proportion constituted by cross-linkable monomer units as not more than any of the upper limits set forth above, adhesiveness of a functional layer can be increased.

The proportion constituted by acidic group-containing monomer units in the acrylic polymer is preferably 0.1 mass% or more, more preferably 0.3 mass% or more, and even more preferably 0.5 mass% or more, and is preferably 20 mass% or less, more preferably 10 mass% or less, and even more preferably 5 mass% or less. By setting the proportion constituted by acidic group-containing monomer units as not less than any of the lower limits set forth above, dispersibility of the binder in the composition for a functional layer and in a functional layer can be increased, and electrochemical characteristics of an electrochemical device including a functional layer can be sufficiently enhanced. Moreover, by setting the proportion constituted by acidic group-containing monomer units as not more than any of the upper limits set forth above, residual water content of a functional layer can be reduced, and electrochemical characteristics of an electrochemical device can be sufficiently enhanced.
Note that the acrylic polymer may also include other monomer units.

<<Glass-transition temperature of binder>>

The glass-transition temperature (Tg) of the binder is preferably -100°C or higher, more preferably -90°C or higher, and even more preferably -80°C or higher, and is preferably lower than 30°C, more preferably 20°C or lower, and even more preferably 15°C or lower. When the glass-transition temperature of the binder is not lower than any of the lower limits set forth above, adhesiveness and strength of the binder can be increased. On the other hand, when the glass-transition temperature of the binder is not higher than any of the upper limits set forth above, flexibility of a functional layer can be increased.

[Content of binder]

The content of the binder is preferably 0.1 parts by mass or more, more preferably 0.2 parts by mass or more, and even more preferably 0.5 parts by mass or more per 100 parts by mass, in total, of heat-resistant fine particles and the particulate polymer, and is preferably 20 parts by mass or less, more preferably 15 parts by mass or less, and even more preferably 10 parts by mass or less per 100 parts by mass, in total, of heat-resistant fine particles and the particulate polymer. When the content of the binder is not less than any of the lower limits set forth above, shedding of the particulate polymer from a functional layer can be sufficiently prevented, and adhesiveness of the functional layer can be sufficiently increased. On the other hand, when the content of the binder is not more than any of the upper limits set forth above, reduction of ion conductivity of a functional layer can be inhibited, and deterioration of output characteristics of an electrochemical device can be inhibited.
The binder can be produced through polymerization of a monomer composition that contains the monomers described above, carried out in an aqueous solvent such as water, for example, but is not specifically limited to being produced in this manner. The proportion constituted by each monomer in the monomer composition is normally set as the same as the proportion constituted by each monomer unit in the binder.
The polymerization method and the polymerization reaction are not specifically limited, and any of the polymerization methods and polymerization reactions given as examples for the polymerization method of the previously described particulate polymer can be used.
Although the binder may have a particulate form or may have a non-particulate form, it is preferable that the binder has a particulate form from a viewpoint of good inhibition of shedding of components that are contained in a functional layer.

<<Heat-resistant fine particles>>

The composition for a functional layer may contain heat-resistant fine particles. The heat-resistant fine particles are not specifically limited and may be fine particles formed of an inorganic material (i.e., inorganic fine particles) or fine particles formed of an organic material (i.e., organic fine particles) that are electrochemically stable and that are stably present in the environment of use of an electrochemical device.
Note that inorganic fine particles or organic fine particles may be used by themselves as the heat-resistant fine particles, or inorganic fine particles and organic fine particles may be used in combination as the heat-resistant fine particles.

[Inorganic fine particles]

The inorganic fine particles may be particles of an inorganic oxide such as aluminum oxide (alumina, $Al_2O_3$), hydrous aluminum oxide (boehmite, AlOOH), gibbsite ($Al(OH)_3$), silicon oxide, magnesium oxide (magnesia), magnesium hydroxide, calcium oxide, titanium oxide (titania), barium titanate ($BaTiO_3$), ZrO, or alumina-silica composite oxide; particles of a nitride such as aluminum nitride or boron nitride; particles of covalently bonded crystals such as silicon or diamond; particles of sparingly soluble ionic crystals such as barium sulfate, calcium fluoride, or barium fluoride; or fine particles of clay such as talc or montmorillonite. These particles may be subjected to element substitution, surface treatment, solid solution treatment, or the like as necessary. Note that one type of inorganic fine particles may be used individually, or two or more types of inorganic fine particles may be used in combination.

[Organic fine particles]

The organic fine particles are fine particles formed of a polymer that differs from the specific particulate polymer and binder described above and that does not display adhesiveness.

Examples of the organic fine particles include particles of various cross-linked polymers such as cross-linked polymethyl methacrylate, cross-linked polystyrene, cross-linked polydivinylbenzene, cross-linked styrenedivinylbenzene copolymer, polystyrene, polyimide, polyamide, polyamide imide, melamine resin, phenolic resin, and benzoguanamine-formaldehyde condensate, particles of heat-resistant polymers such as polysulfone, polyacrylonitrile, polyaramids, polyacetal, and thermoplastic polyimide, and modified products and derivatives of any of the preceding examples. Note that one type of organic fine particles may be used individually, or two or more types of organic fine particles may be used in combination.

Also note that the organic fine particles are formed of a polymer that is not adhesive as previously described. Specifically, the polymer forming the organic fine particles preferably has a glass-transition temperature of 150°C or higher.

Of the heat-resistant fine particles described above, inorganic fine particles or organic fine particles formed of a polymer having a glass-transition temperature of 150°C or higher are preferable from a viewpoint of further improving heat resistance of a device member formed of a laminate, inorganic fine particles are more preferable, and particles formed of alumina (alumina particles), particles formed of boehmite (boehmite particles), particles formed of barium sulfate (barium sulfate particles), and particles formed of magnesium hydroxide (magnesium hydroxide particles) are even more preferable.

[Properties of heat-resistant fine particles]

The volume-average particle diameter of the heat-resistant fine particles is preferably 0.1 μm or more, more preferably 0.2 μm or more, and even more preferably 0.3 μm or more, and is preferably 1.0 μm or less, more preferably 0.9 μm or less, and even more preferably 0.8 μm or less. When the volume-average particle diameter of the heat-resistant fine particles is 0.1 μm or more, reduction of ion conductivity of a functional layer caused by excessively dense packing of the heat-resistant fine particles in the functional layer can be inhibited, and an electrochemical device can be caused to display excellent output characteristics. On the other hand, when the volume-average particle diameter of the heat-resistant fine particles is 1.0 μm or less, a device member formed of a laminate including a functional layer can be caused to sufficiently display excellent heat resistance even when the thickness of the functional layer is reduced. Consequently, heat resistance of the device member can be sufficiently ensured while also increasing the capacity of an electrochemical device.

<Mixing ratio of heat-resistant fine particles and particulate polymer>

With regards to the mixing ratio of the heat-resistant fine particles and the particulate polymer in the composition for a functional layer, particularly in a case in which the heat-resistant fine particles are inorganic particles, it is preferable to set the mixing ratio such that the proportional content of the particulate polymer is not less than 5 mass% and not more than 40 mass% when the mass of the heat-resistant fine particles is taken to be 100 mass%. When the mixing ratio of the heat-resistant fine particles and the particulate polymer is within the range set forth above, a good balance of heat resistance and adhesiveness of a functional layer can be achieved.

<Other components>

No specific limitations are placed on components other than those described above that can optionally be contained in the composition for a functional layer so long as they do not affect electrochemical reactions in an electrochemical device. For example, known additives such as dispersants, viscosity modifiers, and wetting agents may be used. One of these other components may be used individually, or two or more of these other components may be used in combination.

(Method of producing composition for electrochemical device functional layer)

The presently disclosed method of producing a composition for an electrochemical device functional layer is a method of producing the presently disclosed composition for an electrochemical device functional layer set forth above and includes, in production of the particulate polymer, performing a polymerization step in which a monomer composition (B) is added into a polymerization system and polymerization is continued after polymerization of a monomer composition (A) has been initiated, wherein the monomer composition (A) and the monomer composition (B) have different chemical compositions to each other, the monomer composition (B) contains either or both of a hydroxyl group-containing monomer and an epoxy group-containing monomer, and a solid content mass ratio (%) of the monomer compositions (A) and (B) calculated according to formula (2), shown below, is 40 mass% or less. By performing a polymerization step in which the monomer composition (B) is added into the polymerization system and polymerization is continued after polymerization of the monomer composition (A) has been initiated, and by setting the proportion constituted by the monomer composition (B) as 40 mass% or less of the total of the monomer compositions (A) and (B), it is possible to effectively inhibit coarsening of the particulate polymer and also to inhibit thickening of an obtained functional layer.

Solid content mass ratio (%) = {(Parts by mass of monomer composition (B))/(Total parts by mass of monomer compositions (A) and (B))} $\times$ 100% (2)

The production process of the particulate polymer that is compounded in the composition for a functional layer is as described in the "Production process of particulate polymer" section.

In addition, in the method of producing a composition for a functional layer, the previously described particulate polymer and other optional components (binder, heat-resistant fine particles, water as a dispersion medium, and other components besides those listed) may be mixed, for example, though no specific limitations are made. Note that in a case in which the particulate polymer or the binder has been produced through polymerization of a monomer composition in an aqueous solvent, the particulate polymer or binder may be mixed with other components while still in the form of a water dispersion. Moreover, in a case in which the particulate polymer or the binder is mixed in the form of a water dispersion, water in the water dispersion may be used as the dispersion medium.

Although no specific limitations are placed on the mixing method of the above-described components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

The specific particulate polymer described above is preferably premixed with a dispersant such as a nonionic surfactant, an anionic surfactant, a cationic surfactant, or an amphoteric surfactant prior to being mixed with the heat-resistant fine particles and the binder. In particular, anionic surfactants can suitably be used as the dispersant. Specific examples of anionic surfactants include sulfuric acid ester salts of higher alcohols such as sodium lauryl sulfate, ammonium lauryl sulfate, sodium dodecyl sulfate, ammonium dodecyl sulfate, sodium octyl sulfate, sodium decyl sulfate, sodium tetradecyl sulfate, sodium hexadecyl sulfate, and sodium octadecyl sulfate; alkylbenzene sulfonic acid salts such as sodium dodecylbenzenesulfonate, sodium laurylbenzenesulfonate, and sodium hexadecylbenzenesulfonate; and aliphatic sulfonic acid salts such as sodium laurylsulfonate, sodium dodecylsulfonate, and sodium tetradecylsulfonate. The amount of the dispersant relative to 100 parts by mass of the particulate polymer is preferably 0.01 parts by mass or more, more preferably 0.05 parts by mass or more, and even more preferably 0.1 parts by mass or more, and is preferably 0.5 parts by mass or less, more preferably 0.4 parts by mass or less, and even more preferably 0.3 parts by mass or less. When the amount of the dispersant is not less than any of the lower limits set forth above, uneven distribution of the particulate polymer in a functional layer can be inhibited, and cycle characteristics of an obtained electrochemical device can be enhanced. When the amount of the dispersant is not more than any of the upper limits set forth above, it is possible to suppress an increase of internal resistance and inhibit deterioration of rate characteristics of an obtained electrochemical device.

(Functional layer for electrochemical device)

A feature of the presently disclosed functional layer for an electrochemical device is that it is formed using the presently disclosed composition for an electrochemical device functional layer set forth above. This functional layer for an electrochemical device can display sufficiently high wet adhesiveness even with a thin thickness and can sufficiently enhance cycle characteristics of an obtained electrochemical device. More specifically, the presently disclosed functional layer for an electrochemical device is formed of a dried product of the presently disclosed composition for an electrochemical device functional layer set forth above, and this functional layer can contain the previously described particulate polymer and optionally contained components (binder, heat-resistant fine particles, and other components). Note that components contained in the functional layer are components that were contained in the composition for a functional layer set forth above, and the preferred ratio of these components is also the same as the preferred ratio of the components in the composition for a functional layer.

The method by which the functional layer is produced is not specifically limited and may be a method in which the composition for a functional layer is supplied onto a releasable sheet and is dried to obtain the functional layer as a peelable layer or a method in which, as subsequently described in the "Laminate for electrochemical device" section, the functional layer is produced through a step (supply step) of supplying the composition for a functional layer onto a substrate that can be included in the laminate for an electrochemical device described further below and a step (drying step) of drying the composition for a functional layer that has been supplied onto the substrate, for example. Of these methods, the latter is preferable as the production method of the functional layer as described below.

(Laminate for electrochemical device)

The laminate for an electrochemical device includes a substrate and the presently disclosed functional layer for an electrochemical device, formed on the substrate. The laminate for an electrochemical device has excellent wet adhesiveness and can sufficiently enhance cycle characteristics of an obtained electrochemical device as a result of including a functional layer formed using the composition for a functional layer set forth above.

<Substrate>

The substrate may be selected as appropriate depending on the type of electrochemical device member for which the presently disclosed laminate is to be used. For example, in a case in which the presently disclosed laminate is to be used as a separator, a separator substrate is used as the substrate. Moreover, in a case in which the presently disclosed laminate is to be used as an electrode, for example, an electrode substrate is used as the substrate. In particular, the presently disclosed laminate is preferably a separator.

<<Separator substrate>>

The separator substrate is not specifically limited and may be a known separator substrate such as an organic separator substrate. The organic separator substrate is a porous member that is formed of an organic material. The organic separator substrate may, for example, be a microporous membrane or non-woven fabric containing a polyolefinic resin such as polyethylene, polypropylene, polybutene, or polyvinyl chloride, an aromatic polyamide resin, or the like.

Of these separator substrates, a microporous membrane formed of a polyolefinic resin is preferable from a viewpoint that this makes it possible to increase the ratio of electrode active material in an electrochemical device and to increase the volumetric capacity of the electrochemical device.

Although the separator substrate may be of any thickness, the thickness thereof is preferably not less than 5 μm and not more than 30 μm, more preferably not less than 5 μm and not more than 20 μm, and even more preferably not less than 5 μm and not more than 18 μm.

<<Electrode substrate>>

The electrode substrate (positive electrode substrate or negative electrode substrate) is not specifically limited and may be an electrode substrate obtained by forming an electrode mixed material layer on a current collector.

The current collector, an electrode active material (positive electrode active material or negative electrode active material) and a binder for an electrode mixed material layer (binder for a positive electrode mixed material layer or binder for a negative electrode mixed material layer) in the electrode mixed material layer, and the method by which the electrode mixed material layer is formed on the current collector may be known examples thereof such as those described in JP2013-145763A, for example.

<Production method of laminate>

The method by which the presently disclosed laminate is produced is as previously described in the "Functional layer for electrochemical device" section. The following provides an illustrative description relating to a production method including a "supply step" and a "drying step", which is a suitable production method.

<<Supply step>>

In the supply step, the presently disclosed composition for a functional layer set forth above is supplied onto the substrate so as to form a coating film of the composition for a functional layer on the substrate. The method by which the composition for a functional layer is supplied onto the substrate is not specifically limited and may be by applying the composition for a functional layer onto the surface of the substrate or by immersing the substrate in the composition for a functional layer. Application of the composition for a functional layer onto the surface of the substrate is preferable because this facilitates control of thickness of the produced functional layer.

Examples of methods by which the composition for a functional layer may be applied onto the surface of the substrate include, but are not specifically limited to, doctor blading, reverse roll coating, direct roll coating, gravure coating, bar coating, extrusion coating, and brush coating.

Note that in the supply step, a coating film of the composition for a functional layer may be formed at just one side of the substrate or coating films of the composition for a functional layer may be formed at both sides of the substrate.

<<Drying step>>

In the drying step, the coating film of the composition for a functional layer that has been formed on the substrate in the supply step is dried so as to remove the dispersion medium and form a functional layer.

The coating film of the composition for a functional layer can be dried by any commonly known method without any specific limitations. Examples of drying methods that may be used include drying by warm, hot, or low-humidity air; drying in a vacuum; and drying by irradiation with infrared light, an electron beam, or the like. Although no specific limitations are placed on the drying conditions, the drying temperature is preferably 50°C to 150°C, and the drying time is preferably 1 minute to 30 minutes.

Note that in production of the presently disclosed laminate, the supply step and the drying step may be performed with respect to one side of the substrate so as to form a functional layer, and then the supply step and the drying step may be further performed with respect to the other side of the substrate so as to form a functional layer.

In a case in which the functional layer is a heat-resistant adhesive layer and in which the composition for a functional layer contains heat-resistant fine particles, the functional layer that has been formed using the composition for a functional layer normally has a plurality of heat-resistant fine particles stacked in a thickness direction of the functional layer. The thickness of the layer resulting from stacking of heat-resistant fine particles in the thickness direction of the functional layer (hereinafter, also referred to as a "heat-resistant fine particle layer") is preferably 0.5 μm or more, more preferably 0.8 μm or more, and even more preferably 1 μm or more, and is preferably 6 μm or less, more preferably 5 μm or less, and even more preferably 4 μm or less. When the thickness of the heat-resistant fine particle layer is not less than any of the lower limits set forth above, the functional layer has extremely good heat resistance. On the other hand, when the thickness of the heat-resistant fine particle layer is not more than any of the upper limits set forth above, ion diffusivity of the functional layer can be ensured, and output characteristics of an electrochemical device can be further enhanced.

(Electrochemical device)

The presently disclosed electrochemical device includes electrodes and a separator, and a feature thereof is that it includes the presently disclosed laminate set forth above as either or both of an electrode and a separator. The presently disclosed electrochemical device has excellent cycle characteristics as a result of the presently disclosed laminate set forth above being used as at least one device member among an electrode and a separator.

The presently disclosed electrochemical device may be, but is not specifically limited to, a lithium ion secondary battery, an electric double-layer capacitor, or a lithium ion capacitor, for example, and is preferably a lithium ion secondary battery.

Although the following description gives a lithium ion secondary battery as one example of the presently disclosed electrochemical device and describes a case in which the presently disclosed laminate set forth above is used as a separator of the lithium ion secondary battery, the presently disclosed electrochemical device is not limited to the following example.

<Positive electrode and negative electrode>

An electrode that is formed of a known electrode substrate (positive electrode substrate or negative electrode substrate) such as previously described in the "Substrate" section can be used as a positive electrode or negative electrode.

<Electrolyte solution>

An organic electrolyte solution obtained by dissolving a supporting electrolyte in an organic solvent is normally used as an electrolyte solution. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. In particular, $LiPF_6$, $LiClO_4$, and

$CF_3SO_3Li$ are preferable because they readily dissolve in solvents and exhibit a high degree of dissociation. Note that one electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide.

Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

<Production method of electrochemical device>

No specific limitations are placed on the method by which the presently disclosed electrochemical device is produced. For example, the lithium ion secondary battery described above as one example of the presently disclosed electrochemical device can be produced by stacking the positive electrode and the negative electrode with the separator in-between, performing rolling, folding, or the like of the resultant laminate, as necessary, to place the laminate in a battery container, injecting the electrolyte solution into the battery container, and sealing the battery container. Note that at least one device member among the positive electrode, the negative electrode, and the separator is the presently disclosed laminate. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

In the examples and comparative examples, measurements and evaluations of various attributes were performed as follows.

<Hydroxyl group surface localization rate of particulate polymer>

A particulate polymer produced in each example or comparative example was dried, was chemically modified using anhydrous trifluoroacetic acid, and was fixed to a device sample stage. Thereafter, a Quantera SXM (produced by ULVAC-PHI, Inc.) was used to perform narrow scan measurement of F element and calculate an element ratio under conditions of an X-ray source of monochromatic Al Kα, an X-ray setting of 100 μm ∅ [15 kV, 25 W], a photoelectron extraction angle of 45° relative to the sample surface, bonding energy correction of correction of a peak originating from C1s spectrum C-C bonding to 285.0 eV, and neutralization conditions of combined use of a neutralization gun and an Ar ion gun (neutralization mode). The calculated value was taken to be the "amount of hydroxyl groups calculated through XPS measurement". In addition, the charged amount (mass%) of a hydroxyl group-containing monomer and an epoxy group-containing monomer charged in synthesis of the particulate polymer was converted to mol%, and this converted value was taken to be the "amount of hydroxyl groups contained in particulate polymer". The calculation formula was as in the following formula (1).

Localization rate (%) = {(Amount of hydroxyl groups calculated through XPS measurement [element ratio (%)])/(Amount of hydroxyl groups contained in particulate polymer [mol%])} × 100% (1)

<Glass-transition temperature>

A measurement sample was prepared as described below for each particulate polymer and binder produced in the examples and comparative examples. A water dispersion containing a polymer serving as a measurement subject of glass-transition temperature was dried to obtain a measurement sample. The measurement sample was weighed into an aluminum pan in an amount of 10 mg and was then measured by a differential scanning calorimeter (EXSTAR DSC6220 produced by SII NanoTechnology Inc.) under conditions prescribed in JIS Z 8703 with a measurement temperature range of -100°C to 500°C and a heating rate of 10°C/min, and with an empty aluminum pan as a reference, so as to obtain a differential scanning calorimetry (DSC) curve. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

<Volume-average particle diameter>

<<Volume-average particle diameter D50 and D99 of particulate polymer>>

A particulate polymer produced in each example or comparative example was used as a measurement sample. The measurement sample was weighed out in an amount equivalent to 0.1 g, was taken into a beaker, and 0.1 mL of alkylbenzene sulfonic acid aqueous solution (DRIWEL produced by FUJIFILM Corporation) was added thereto as a dispersant. In addition, 10 mL to 30 mL of a diluent (ISOTON II produced by Beckman Coulter, Inc.) was added into the beaker, and 3 minutes of dispersing was performed using a 20 W (Watt) ultrasonic disperser. Thereafter, a particle diameter distribution (by volume) of the measurement sample was obtained under conditions of an aperture diameter of 20 μm, a medium of ISOTON II, and a measured particle count of 100,000 using a particle size analyzer (Multisizer produced by Beckman Coulter, Inc.), and values for the volume-average particle diameter (D50 and D90) were determined from the obtained particle diameter distribution. The volume-average particle diameter D50 is the particle diameter at which cumulative volume calculated from a small diameter end of the particle diameter distribution reaches 50%, and the volume-based particle diameter D99 is the particle diameter at which cumulative volume calculated from a small diameter end of the particle diameter distribution reaches 99%.

<<Volume-average particle diameter of binder>>

The volume-average particle diameter of a binder produced in each example or comparative example was measured by laser diffraction. Specifically, a water dispersion (adjusted to solid content concentration of 0.1 mass%) containing a produced binder was used as a sample. In a particle diameter distribution (by volume) measured using a laser diffraction particle size analyzer (LS-230 produced by Beckman Coulter, Inc.), the particle diameter D50 at which cumulative volume calculated from a small diameter end of the distribution reached 50% was taken to be the volume-average particle diameter.

<Degree of swelling in electrolyte solution of particulate polymer>

A particulate polymer produced in each example or comparative example was dispersed in deionized water to obtain a water dispersion of the particulate polymer, and this water dispersion was loaded into a petri dish made of polytetrafluoroethylene. The water dispersion in the petri dish was dried at a temperature of 25°C for 48 hours to obtain a powdered sample. Approximately 0.2 g of the sample was pressed at a temperature of 200°C and a pressure of 5 MPa for 2 minutes to obtain a test specimen. The weight of the obtained test specimen was measured and was taken to be WO.

Next, the obtained test specimen was immersed in electrolyte solution (EC:EMC = 25/75 (volume ratio) + $LiPF_6$ (1 mol/L)) having a temperature of 60°C for 72 hours.

After immersion, the test specimen was removed from the electrolyte solution, and electrolyte solution on the surface of the test specimen was wiped off. The weight of the test specimen after immersion was measured and was taken to be W1. The measured weights WO and W1 were used to calculate the degree of swelling in electrolyte solution S (mass%) by S = (W1/WO) × 100.

<Thickness of heat-resistant fine particle layer>

A cross-section of a functional layer-equipped separator was observed using a field emission scanning electron microscope (FE-SEM), and the thickness of a heat-resistant fine particle layer was calculated from an obtained image. Note that the thickness of the heat-resistant fine particle layer was taken to be the distance in a perpendicular direction from the surface of the separator at a side at which the functional layer was formed to a heat-resistant fine particle forming the surface of the functional layer.

<Functional layer thickness>

A functional layer-equipped separator produced in each example or comparative example was cut out as 100 mm × 100 mm, and a film thickness meter (VL-50S-100-B produced by Mitutoyo Corporation) was used to measure the thickness of four corners and the center of the separator. The functional layer thickness was calculated from the measured values according to the following formula and was evaluated according to the following standard.

Functional layer thickness = {(Average value of thickness of four corners and center of functional layer-equipped separator) - (Thickness of separator substrate)}/2

A: Functional layer thickness of 10 μm or less
B: Functional layer thickness of more than 10 μm and not more than 15 μm
C: Functional layer thickness of more than 15 μm

<Wet adhesiveness>

A composition for a functional layer obtained in each example or comparative example was applied onto the surface of a separator substrate, and the composition for a functional layer on the separator substrate was dried at 50°C for 10 minutes to form a functional layer (thickness: 2 μm). This functional layer-equipped separator was used as a separator for evaluation. The functional layer-equipped separator was cut out as a strip shape of 10 mm × 100 mm. The separator was arranged along the surface (negative electrode mixed material layer-side) of a negative electrode produced in each example or comparative example, was subsequently hot pressed at a temperature of 70°C and a pressure of 1.0 MPa for 10 seconds to produce a laminate including the negative electrode and the functional layer-equipped separator, and this laminate was taken to be a test specimen.

The test specimen was placed in laminate packing with approximately 400 μL of electrolyte solution. After 1 hour, the test specimen was pressed, together with the laminate packing, for 10 minutes at 40°C with a pressure of 3.0 MPa. Note that a solution obtained by dissolving $LiPF_6$ as a supporting electrolyte with a concentration of 1 mol/L in a mixed solvent of EC, DEC, and vinylene carbonate (VC) (EC/DEC/VC (volume mixing ratio at 25°C) = 68.5/30/1.5) was used as the electrolyte solution.

The test specimen was subsequently removed, and electrolyte solution on the surface of the test specimen was wiped off. Next, the test specimen was placed with the surface at the current collector-side of the negative electrode facing downward, and cellophane tape was affixed to the surface at the current collector-side of the negative electrode. Tape prescribed by JIS Z 1522 was used as the cellophane tape. The cellophane tape was fixed to a horizontal test stage in advance. One end of the separator substrate was pulled vertically upward at a pulling speed of 50 mm/min to peel off the separator substrate, and the stress during this peeling was measured. Three measurements were made in this manner. An average value of the stress was determined as the peel strength P2 (N/m) and was evaluated by the following standard. The evaluation results are shown in Table 1. A larger peel strength P2 indicates that there is better adhesiveness of the functional layer after immersion in electrolyte solution (wet adhesiveness) and stronger adhesion between the electrode and the functional layer-equipped separator in electrolyte solution.

A: Peel strength P2 of 1.0 N/m or more
B: Peel strength P2 of not less than 0.5 N/m and less than 1.0 N/m
C: Peel strength P2 of less than 0.5 N/m

<Cycle characteristics of electrochemical device>

A lithium ion secondary battery produced in each example or comparative example was left at rest at a temperature of 25°C for 5 hours. Next, the lithium ion secondary battery was charged to a cell voltage of 3.65 V by a 0.2C constant-current method at a temperature of 25°C and was subsequently subjected to 12 hours of aging at a temperature of 60°C. The lithium ion secondary battery was then discharged to a cell voltage of 3.00 V by a 0.2C constant-current method at a temperature of 25°C. Thereafter, the lithium ion secondary battery was subjected to CC-CV charging by a 0.2C constant-current method (upper limit cell voltage: 4.20 V) and CC discharging to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. In this cycling, the discharge capacity of the 1st cycle was defined as X1, and the discharge capacity of the 100th cycle was defined as X2.

The discharge capacity X1 and the discharge capacity X2 were used to determine a capacity maintenance rate ΔC' (= (X2/X1) × 100(%)) that was then evaluated by the following standard. A larger value for the capacity maintenance rate ΔC' indicates that a secondary battery has better cycle characteristics.

A: Capacity maintenance rate ΔC' of 93% or more

B: Capacity maintenance rate ΔC' of not less than 90% and less than 93%

C: Capacity maintenance rate ΔC' of less than 90%

(Example 1)

<Production of particulate polymer>

[Production of monomer composition (A)]

A monomer composition (A) was produced by mixing 60.2 parts of styrene as an aromatic vinyl monomer, 11.4 parts of n-butyl acrylate as a (meth)acrylic acid ester monomer, 0.4 parts of ethylene glycol dimethacrylate as a cross-linkable monomer, and 8.0 parts of glycidyl methacrylate as an epoxy group-containing monomer.

[Production of monomer composition (B)]

A monomer composition (B) was produced by mixing 8.0 parts of styrene as an aromatic vinyl monomer and 12.0 parts of glycidyl methacrylate as an epoxy group-containing monomer.

[Production of metal hydroxide]

A colloidal dispersion liquid (A) containing magnesium hydroxide as a metal hydroxide was produced by gradually adding an aqueous solution (A2) of 16 parts of sodium hydroxide dissolved in 50 parts of deionized water to an aqueous solution (A1) of 24 parts of magnesium chloride dissolved in 200 parts of deionized water under stirring.

[Suspension polymerization]

A particulate polymer was produced by suspension polymerization. Specifically, the monomer composition (A) obtained as described above was added to the colloidal dispersion liquid (A) containing magnesium hydroxide, was further stirred therewith, and then 2.0 parts of t-butyl peroxy-2-ethylhexanoate (PERBUTYL® O (PERBUTYL is a registered trademark in Japan, other countries, or both) produced by NOF Corporation) was added as a polymerization initiator to yield a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the monomer composition (A) in the colloidal dispersion liquid (A) containing magnesium hydroxide.

The magnesium hydroxide-containing colloidal dispersion liquid (A) in which droplets of the monomer composition (A) had been formed was loaded into a reactor, and the temperature was raised to 90°C to initiate polymerization. Polymerization was continued until the polymerization conversion rate reached 90% to yield a water dispersion containing a particulate polymer A. Next, at the point at which the polymerization conversion rate reached 90%, the monomer composition (B) was continuously added, and polymerization was continued. At the point at which the conversion rate reached 98%, cooling was performed to quench the reaction to yield a water dispersion containing a particulate polymer.

In addition, the water dispersion containing the particulate polymer was stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated a number of times. Thereafter, separation was performed by filtration to obtain solid content that was then loaded into a vessel of a dryer and was dried at 40°C for 48 hours to obtain the dry particulate polymer. The obtained particulate polymer had a structure in which hydroxyl groups were localized at the surface.

The hydroxyl group surface localization rate, volume-average particle diameter D50 and D99, glass-transition temperature, and degree of swelling in electrolyte solution of the obtained particulate polymer were measured. The results are shown in Table 1.

<Production of water dispersion containing binder (α)>

A reactor including a stirrer was supplied with 70 parts of deionized water, 0.15 parts of sodium lauryl sulfate (EMAL® 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (α) was produced in a separate vessel by mixing 50 parts of deionized water, 0.5 parts of sodium dodecylbenzenesulfonate as a dispersion stabilizer, 94 parts of n-butyl acrylate as a (meth)acrylic acid ester monomer, 2 parts of methacrylic acid as an acidic group-containing monomer, 2 parts of acrylonitrile as a nitrile group-containing monomer, and 1 part of allyl methacrylate and 1 part of allyl glycidyl ether as cross-linkable monomers.

The obtained monomer composition (α) was continuously added into the above-described reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate binder (α) as an acrylic polymer. The obtained particulate binder (α) had a volume-average particle diameter of 0.25 μm and a glass-transition temperature of -40°C.

<Production of composition for functional layer>

A pre-mixing slurry was obtained by adding 0.5 parts of polyacrylic acid as a dispersant to 75 parts of alumina (AKP3000 produced by Sumitomo Chemical Co., Ltd.; volume-average particle diameter: 0.7 μm) as heat-resistant fine particles, further adding 5 parts in terms of solid content of the water dispersion containing the binder (α) and 1.5 parts of carboxymethyl cellulose as a thickener, adjusting the solid content concentration to 55% through addition of deionized water, and performing mixing using a ball mill.

A mixture was obtained by adding 0.2 parts of sodium dodecylbenzenesulfonate (NEOPELEX G-15 produced by Kao Corporation) as a surfactant to 100 parts of the particulate polymer and performing mixing thereof such that the solid content concentration was 40%, and then this mixture was added to the pre-mixing slurry described above such that a mixing ratio (by mass) of the heat-resistant fine particles and the particulate polymer was heat-resistant fine particles:particulate polymer = 75:20. The solid content concentration was further adjusted to 40% through addition of deionized water to yield a composition for a functional layer (slurry composition).

<Production of functional layer-equipped separator>

A microporous membrane (thickness: 12 μm) made of polyethylene was prepared as a separator substrate. The composition for a functional layer obtained as described above was applied onto one side of this separator substrate by bar coating. Next, the separator substrate with the composition for a functional layer applied thereon was dried at 50°C for 1 minute to form a functional layer. The same operations were performed with respect to the other side of the separator substrate to produce a functional layer-equipped separator including functional layers at both sides of the separator substrate. In each of these functional layers, the thickness of a heat-resistant fine particle layer was set as 2.0 μm.

The electrolyte solution contact angle of the obtained functional layer-equipped separator was measured. The result is shown in Table 1.

<Production of positive electrode>

A slurry composition for a positive electrode was produced by mixing 100 parts of $LiCoO_2$ (volume-average particle diameter: 12 μm) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.

The slurry composition for a positive electrode was applied onto aluminum foil of 20 μm in thickness serving as a current collector by a comma coater such as to have a thickness after drying of approximately 150 μm. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 μm).

<Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. The reaction was quenched by cooling at the point at which the polymerization conversion rate reached 96% to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing the desired binder for a negative electrode mixed material layer.

After compounding 80 parts of artificial graphite (volume-average particle diameter: 15.6 μm) as a negative electrode active material (1) and 16 parts of a silicon-based active material SiOx (volume-average particle diameter: 4.9 μm) as a negative electrode active material (2) and then mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and a further 15 minutes of mixing was performed at 25°C to yield a mixture. Deionized water and 1.5 parts in terms of solid content of the water dispersion containing the binder for a negative electrode mixed material layer described above were added to this mixture, the final solid content concentration was adjusted to 52%, and 10 minutes of mixing was performed to yield a mixture. The mixture was subjected to defoaming under reduced pressure to yield a slurry composition for a negative electrode having good fluidity.

The slurry composition for a negative electrode was applied onto copper foil of 20 μm in thickness serving as a current collector by a comma coater such as to have a thickness after drying of approximately 150 μm. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 μm).

The functional layer-equipped separator, positive electrode, and negative electrode obtained as described above were used to evaluate wet adhesiveness of a functional layer. The result is shown in Table 1.

<Production of lithium ion secondary battery>

The post-pressing positive electrode produced as described above was cut out as a rectangle of 49 cm × 5 cm and was placed with the surface at the positive electrode mixed material layer-side facing upward. The functional layer-equipped separator was cut out as 120 cm × 5.5 cm and was arranged on this positive electrode mixed material layer such that the positive electrode was positioned at one longitudinal direction side of the functional layer-equipped separator. In addition, the post-pressing negative electrode produced as described above was cut out as a rectangle of 50 cm × 5.2 cm and was arranged on the functional layer-equipped separator such that the surface at the negative electrode mixed material layer-side faced toward the functional layer-equipped separator and the negative electrode was positioned at the other longitudinal direction side of the functional layer-equipped separator. The resultant laminate was wound by a winding machine to obtain a roll. This roll was pressed into a flattened form at 70°C and 1 MPa, was subsequently enclosed in an aluminum packing case serving as a battery case, and electrolyte solution (solvent: ethylene carbonate/diethyl carbonate/vinylene carbonate (volume ratio) = 68.5/30/1.5; electrolyte: $LiPF_6$ of 1 M in concentration) was injected such that no air remained. An opening of the aluminum packing case was heat sealed at a temperature of 150°C so as to close the aluminum packing case and produce a wound lithium ion secondary battery having a capacity of 800 mAh.

The obtained lithium ion secondary battery was used to evaluate cycle characteristics of the secondary battery as an electrochemical device. The result is shown in Table 1.

(Examples 2, 5, and 6)

Various operations, measurements, and evaluations were performed in the same way as in Example 1 with the exception that in production of the particulate polymer, the chemical compositions of the monomer compositions (A) and (B) were changed as shown in Table 1. The results are shown in Table 1.

(Example 3)

In production of the particulate polymer, a metal hydroxide produced as described below was used. Moreover, in production of the functional layer-equipped separator, the composition for a functional layer was applied such that the thickness of a heat-resistant fine particle layer was 2.0 μm. With the exception of these points, various operations, measurements, and evaluations were performed in the same way as in Example 1. The results are shown in Table 1.

[Production of metal hydroxide]

A colloidal dispersion liquid (A) containing magnesium hydroxide as a metal hydroxide was produced by gradually adding an aqueous solution (A2) of 5.5 parts of sodium hydroxide dissolved in 50 parts of deionized water to an aqueous solution (A1) of 7.8 parts of magnesium chloride dissolved in 200 parts of deionized water under stirring.

(Example 4)

In production of the particulate polymer, a metal hydroxide produced as described below was used. Moreover, in production of the functional layer-equipped separator, the composition for a functional layer was applied such that the thickness of a heat-resistant fine particle layer was 2.0 μm. With the exception of these points, various operations, measurements, and evaluations were performed in the same way as in Example 1. The results are shown in Table 1.

[Production of metal hydroxide]

A colloidal dispersion liquid (A) containing magnesium hydroxide as a metal hydroxide was produced by gradually adding an aqueous solution (A2) of 19 parts of sodium hydroxide dissolved in 50 parts of deionized water to an aqueous solution (A1) of 27 parts of magnesium chloride dissolved in 200 parts of deionized water under stirring.

(Examples 7 and 8)

In production of the particulate polymer, the timing at which addition of the monomer composition (B) was initiated was changed to a timing at which the value of the polymerization conversion rate of the monomer composition (A) was as shown in Table 1. With the exception of this point, various operations, measurements, and evaluations were performed in the same way as in Example 1. The results are shown in Table 1.

(Example 9)

Various operations, measurements, and evaluations were performed in the same way as in Example 1 with the exception that in production of the particulate polymer, the chemical compositions of the monomer compositions (A) and (B) were changed as shown in Table 1, and 2-hydroxyethyl methacrylate as a hydroxyl group-containing monomer was compounded instead of an epoxy group-containing monomer. The results are shown in Table 1.

(Comparative Example 1)

In production of the particulate polymer, only the monomer composition (A) was used. More specifically, a monomer composition (A) having a chemical composition shown in Table 1 was used, polymerization was performed under the same conditions as in Example 1, and cooling was performed to quench the reaction at the point at which the polymerization conversion rate reached 98% to yield a water dispersion containing a particulate polymer. With the exception of this point, various operations, measurements, and evaluations were performed in the same way as in Example 1. The results are shown in Table 1.

(Comparative Example 2)

Various operations, measurements, and evaluations were performed in the same way as in Example 1 with the exception that in production of the particulate polymer, the chemical compositions of the monomer compositions (A) and (B) were changed as shown in Table 1, and the timing of addition of the monomer composition (B) was changed to a timing at which the polymerization conversion rate of the monomer composition (A) was 96%. The results are shown in Table 1.

(Comparative Example 3)

In production of the particulate polymer, a metal hydroxide produced as described below was used. Moreover, in production of the functional layer-equipped separator, the composition for a functional layer was applied such that the thickness of a heat-resistant fine particle layer was 2.0 μm. With the exception of these points, various operations, measurements, and evaluations were performed in the same way as in Example 1. The results are shown in Table 1.

[Production of metal hydroxide]

A colloidal dispersion liquid (A) containing magnesium hydroxide as a metal hydroxide was produced by gradually adding an aqueous solution (A2) of 21 parts of sodium hydroxide dissolved in 50 parts of deionized water to an aqueous solution (A1) of 31 parts of magnesium chloride dissolved in 200 parts of deionized water under stirring.

(Comparative Example 4)

In production of the particulate polymer, a metal hydroxide produced as described below was used. Moreover, in production of the functional layer-equipped separator, the composition for a functional layer was applied such that the thickness of a heat-resistant fine particle layer was 2.0 μm. With the exception of these points, various operations, measurements, and evaluations were performed in the same way as in Example 1. The results are shown in Table 1.

[Production of metal hydroxide]

A colloidal dispersion liquid (A) containing magnesium hydroxide as a metal hydroxide was produced by gradually adding an aqueous solution (A2) of 2.8 parts of sodium hydroxide dissolved in 50 parts of deionized water to an aqueous solution (A1) of 4 parts of magnesium chloride dissolved in 200 parts of deionized water under stirring.

In Table 1:

"ST" indicates styrene;
"BA" indicates n-butyl acrylate;
"EDMA" indicates ethylene glycol dimethacrylate;
"GMA" indicates glycidyl methacrylate;
"2HEMA" indicates 2-hydroxyethyl methacrylate; and
"ACR" indicates acrylic polymer.

[Table 1]

| | | | | Units | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|---|---|---|
| Particulate polymer | Attributes | Hydroxyl group surface localization rate | | % | 54 | 26 | 54 | 54 | 36 | 58 | 27 | 54 | 54 | 18 | 60 | 54 | 54 |
| | | Volume-average particle diameter D99 | | μm | 5.0 | 5.0 | 13.0 | 3.0 | 13.0 | 13.0 | 5.0 | 13.0 | 5.0 | 5.0 | 20.0 | 1.5 | 22.0 |
| | | Volume-average particle diameter D50 | | μm | 3.0 | 3.0 | 9.0 | 1.5 | 3.0 | 3.0 | 3.0 | 3.0 | 3.0 | 3.0 | 3.0 | 0.8 | 13.0 |
| | | Hydroxyl group-containing monomer unit or epoxy group-containing monomer unit | | Mass% | 20 | 6 | 20 | 20 | 38 | 29 | 20 | 20 | 20 | 10 | 35 | 20 | 20 |
| | | Glass-transition temperature | | °C | 77 | 85 | 77 | 77 | 50 | 65 | 77 | 77 | 77 | 60 | 58 | 77 | 77 |
| | | Degree of swelling in electrolyte solution | | % | 210 | 180 | 210 | 210 | 300 | 270 | 210 | 210 | 210 | 190 | 300 | 210 | 210 |
| | Production method | Monomer composition ratio (B)/((A) + (B)) | | % | 20 | 20 | 20 | 20 | 20 | 38 | 20 | 20 | 20 | - | 50 | 20 | 20 |
| | | Polymerization conversion rate of monomer composition (A) at time of addition of monomer composition (B) | | % | 90 | 90 | 90 | 90 | 90 | 90 | 73 | 94 | 90 | - | 96 | 90 | 90 |
| | | Monomer composition (A) | ST | Mass% | 60.2 | 63.6 | 60.2 | 60.2 | 45.1 | 46.7 | 60.2 | 60.2 | 60.2 | 65.5 | 37.6 | 60.2 | 60.2 |
| | | | BA | Mass% | 11.4 | 12.0 | 11.4 | 11.4 | 8.5 | 8.8 | 11.4 | 11.4 | 11.4 | 24 | 7.1 | 11.4 | 11.4 |
| | | | EDMA | Mass% | 0.4 | 0.4 | 0.4 | 0.4 | 0.4 | 0.3 | 0.4 | 0.4 | 0.4 | 0.5 | 0.3 | 0.4 | 0.4 |
| | | | GMA | Mass% | *8.0* | *4.0* | 8.0 | *8.0* | 26.0 | 6.2 | 8.0 | *8.0* | 0 | 10.0 | *5.0* | 8.0 | 8.0 |
| | | | 2HEMA | Mass% | 0 | 0 | 0 | 0 | 0 | 0 | 0.0 | 0 | 8 | 0 | 0 | 0 | 0 |
| | | Monomer composition (B) | ST | Mass% | 8.0 | 18.0 | 8.0 | 8.0 | 8.0 | 15.2 | 8.0 | 8.0 | 8.0 | - | 20.0 | 8.0 | 8.0 |
| | | | GMA | Mass% | 12.0 | 2.0 | 12.0 | 12.0 | 12.0 | 22.8 | 12.0 | 12.0 | 0 | - | 30.0 | 12.0 | 12.0 |
| | | | 2HEMA | Mass% | 0 | 0 | 0 | 0 | 0 | 0 | 0 | 0 | 12.0 | - | 0 | 0 | 0 |

(continued)

| | | Units | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|---|
| | Additive amount | Parts by mass | 20 | 20 | 20 | 20 | 20 | 20 | 20 | 20 | 20 | 20 | 20 | 20 | 20 |
| Heat-resistant fine particles | Type | - | Alumina | Alumina | Alumina | Alumina | Alumina | Alumina | Alumina | Alumina | Alumina | Alumina | Alumina | Alumina | Alumina |
| | Additive amount | Parts by mass | 75 | 75 | 75 | 75 | 75 | 75 | 75 | 75 | 75 | 75 | 75 | 75 | 75 |
| Binder (ACR) | Additive amount | Parts by mass | 5 | 5 | 5 | 5 | 5 | 5 | 5 | 5 | 5 | 5 | 5 | 5 | 5 |
| Evaluation | Functional layer thickness | | A | A | B | A | B | B | A | B | A | A | C | A | C |
| | Adhesive strength in electrolyte solution | | A | B | A | B | A | A | B | A | A | C | A | C | A |
| | Cycle characteristics | | A | B | A | B | A | A | B | A | A | C | A | C | A |

It can be seen from Table 1 that in Examples 1 to 9 in which the used composition for an electrochemical device functional layer contained a particulate polymer having a hydroxyl group surface localization rate of 25% or more and also having a volume-based particle diameter D99 of 15.0 μm or less and a volume-average particle diameter D50 of not less than 1.0 μm and not more than 10.0 μm, sufficiently high wet adhesiveness could be displayed even with a thin thickness, and cycle characteristics of an obtained electrochemical device could be sufficiently enhanced. It can also be seen that the above-described effects could not be achieved in Comparative Example 1 in which the used composition for an electrochemical device functional layer contained a particulate polymer having a hydroxyl group surface localization rate of less than 25% and Comparative Examples 2 to 4 in which the used composition for an electrochemical device functional layer contained a particulate polymer having a particle diameter distribution that did not satisfy the specific conditions described above.

INDUSTRIAL APPLICABILITY

According to the present disclosure, it is possible to provide a composition for a functional layer that can display sufficiently high wet adhesiveness even with a thin thickness and that can sufficiently enhance cycle characteristics of an obtained electrochemical device, and also to provide a method of producing this composition for a functional layer.

Moreover, according to the present disclosure, it is possible to provide a functional layer for an electrochemical device that can display sufficiently high wet adhesiveness even with a thin thickness and that can sufficiently enhance cycle characteristics of an obtained electrochemical device.

Furthermore, according to the present disclosure, it is possible to provide a laminate for an electrochemical device including a functional layer for an electrochemical device that can display sufficiently high wet adhesiveness even with a thin thickness and that can sufficiently enhance cycle characteristics of an obtained electrochemical device, and also to provide an electrochemical device that includes this laminate for an electrochemical device and that has excellent cycle characteristics.

## Claims

**1.** A composition for an electrochemical device functional layer comprising a particulate polymer, wherein

the particulate polymer has a hydroxyl group surface localization rate of 25% or more as calculated according to formula (1), shown below:

localization rate (%) = {(amount of hydroxyl groups calculated through XPS measurement [element ratio (%)])/(amount of hydroxyl groups contained in particulate polymer [mol%])} × 100% (1)

and the particulate polymer has a volume-based particle diameter D99 of 15.0 μm or less and a volume-average particle diameter D50 of not less than 1.0 μm and not more than 10.0 μm.

**2.** The composition for an electrochemical device functional layer according to claim 1, wherein the particulate polymer includes a hydroxyl group-containing monomer unit or an epoxy group-containing monomer unit in a proportion of not less than 5 mass% and not more than 40 mass%.

**3.** A method of producing a composition for an electrochemical device functional layer that is a method of producing the composition for an electrochemical device functional layer according to claim 1 or 2, comprising, in production of the particulate polymer, performing polymerization in which a monomer composition (B) is added into a polymerization system and polymerization is continued after polymerization of a monomer composition (A) has been initiated, wherein

the monomer composition (A) and the monomer composition (B) have different chemical compositions to each other,
the monomer composition (B) contains either or both of a hydroxyl group-containing monomer and an epoxy group-containing monomer, and
a solid content mass ratio (%) of the monomer composition (A) and the monomer composition (B) calculated according to formula (2), shown below:

$$\text{solid content mass ratio (\%)} = \{(\text{parts by mass of monomer composition (B)})/(\text{total parts by mass of monomer compositions (A) and (B)})\} \times 100(\%) \quad (2)$$

is 40 mass% or less.

**4.** The method of producing a composition for an electrochemical device functional layer according to claim 3, comprising, in the polymerization, adding the monomer composition (B) into the polymerization system at a time at which a polymerization conversion rate of the monomer composition (A) is not less than 70% and not more than 95%.

**5.** A functional layer for an electrochemical device formed using the composition for an electrochemical device functional layer according to claim 1 or 2.

**6.** A laminate for an electrochemical device comprising: a substrate; and the functional layer for an electrochemical device according to claim 5, formed on the substrate.

**7.** An electrochemical device comprising the laminate for an electrochemical device according to claim 6.

## INTERNATIONAL SEARCH REPORT

International application No.
**PCT/JP2024/000500**

### A. CLASSIFICATION OF SUBJECT MATTER

***H01M 50/443***(2021.01)i; ***H01G 11/52***(2013.01)i; ***H01M 4/02***(2006.01)i; ***H01M 4/04***(2006.01)i; ***H01M 4/13***(2010.01)i; ***H01M 4/139***(2010.01)i; ***H01M 50/403***(2021.01)i; ***H01M 50/414***(2021.01)i; ***H01M 50/451***(2021.01)i
FI: H01M50/443 E; H01G11/52; H01M4/02 Z; H01M4/04 Z; H01M4/13; H01M4/139; H01M50/403 D; H01M50/414; H01M50/443 B; H01M50/451

According to International Patent Classification (IPC) or to both national classification and IPC

### B. FIELDS SEARCHED

Minimum documentation searched (classification system followed by classification symbols)

H01M50/443; H01G11/52; H01M4/02; H01M4/04; H01M4/13; H01M4/139; H01M50/403; H01M50/414; H01M50/451

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2022/124126 A1 (ZEON CORPORATION) 16 June 2022 (2022-06-16) example 1 | 1-2, 5-7 |
| A | WO 2013/187188 A1 (JSR CORPORATION) 19 December 2013 (2013-12-19) | 1-7 |
| A | WO 2020/090927 A1 (ZEON CORPORATION) 07 May 2020 (2020-05-07) | 1-7 |

☐ Further documents are listed in the continuation of Box C.

☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/000500**

| Patent document cited in search report | Publication date (day/month/year) | Patent family member(s) | Publication date (day/month/year) |
|---|---|---|---|
| WO 2022/124126 A1 | 16 June 2022 | EP 4261922 A1 example 1 | |
| | | CN 116615812 A | |
| | | KR 10-2023-0118093 A | |
| WO 2013/187188 A1 | 19 December 2013 | CN 104205443 A | |
| | | KR 10-2015-0029610 A | |
| WO 2020/090927 A1 | 07 May 2020 | KR 10-2021-0080387 A | |
| | | CN 113169334 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022124126 A1
- CN 112920747 A
- JP 2013145763 A